# EUROPEAN PATENT APPLICATION

(11) **EP 3 242 489 A1**
(43) Date of publication of application: **08.11.2017**
(21) Application number: 16305513.0
(22) Date of filing: 03.05.2016
(51) Int. Cl.: H04N 21/41

(54) **AUDIO/VIDEO RECEIVER DEVICE**

(71) Applicant: Thomson Licensing, 92130 Issy-les-Moulineaux (FR)
(72) Inventor: BERTIN, Jean-Pierre, 35576 Cesson-Sévigné Cedex (FR); STEYER, Jean-Marie, 35576 Cesson-Sévigné Cedex (FR); AUBIN, Anthony, 35576 Cesson-Sévigné Cedex (FR)
(74) Representative: Huchet, Anne

(57) **Abstract**

An audio/video receiver device is split in a wall plug part and a decoder box part comprised in separate housings. The wall plug part is configured to be plugged in a wall outlet. The decoder box part is configured to be put in a tv furniture. The wall plug part comprises a receiver front-end and comprises interfaces that are otherwise found on the rear panel of the prior art audio/video receiver device. The wall plug part transmits received audio/video streams and power via a power and high speed communication cable to the decoder box part. Lightweight and small decoder box design is made possible.

## Description

### FIELD

The present disclosure generally relates to the field of audio/video receiver devices, and in particular to size reduction of such devices.

### BACKGROUND

Manufacturers of audio/video receiver devices are confronted with requirements from service providers to develop audio/video receiver devices for satellite, cable, terrestrial or Internet Protocol (IP) reception that differentiate from their competitors in both the functions they offer as well as in innovative design. While progress has been made in size reduction of electronic components for these devices, non-negligible space is still required for placing connectors and associated various interface circuits, for example AC or DC power input, antenna coaxial input/output, RJ-45 network connection, and audio/video output. The size and presence of these connectors and the required associated electronic circuits limits small size and smart design.

There is thus a need for further size reduction of the hardware required for audio/video receiver devices.

### SUMMARY

The present disclosure aims at alleviating at least some of the deficiencies discussed in the background section.

To this end, the present principles comprise an audio/video receiver device for receiving audio/video streams. The audio/video receiver device is split in two parts and comprises a wall plug part in a first housing; a decoder box part in a second housing; a first interface in the wall plug part and a second interface in the decoder box part. The first interface and the second interface are configured to electrically interconnect the wall plug part and the decoder box part through an interface cable. The wall plug part comprises at least a receiver front-end configured to receive the audio/video streams from a distribution network and to transmit the audio/video streams received from the distribution network via the first interface to the decoder box part. The decoder box part comprises a decoder configured to decode the audio/video streams received from the receiver front-end via the second interface.

According to a variant embodiment of the audio/video receiver device, the receiver front-end in the wall plug part is configured to receive tuning commands from the decoder box part for receiving the audio/video streams.

According to a variant embodiment of the audio/video receiver device, the wall plug part further comprises a power supply and wherein the decoder box part is further configured to receive power from the power supply in the wall plug part via the second interface.

According to a variant embodiment of the audio/video receiver device, the decoder box part further comprises a first arrangement configured to put the second interface to a default configuration in which the decoder is disconnected from the second interface and to put the second interface to a connected configuration in which the second interface is connected to the decoder, the first arrangement being further configured to switch the second interface from the default configuration to the connected configuration based on a detection on the second interface of a presence of the wall plug part.

According to a variant embodiment of the audio/video receiver device, the wall plug part further comprises a second arrangement configured to put the first interface in a default configuration in which the receiver front-end is disconnected from the first interface and to put the first interface in a connected configuration in which the first interface is connected to the receiver-front end, the second arrangement being further configured to switch the first interface from the default configuration to the connected configuration based on a reception of a control signal.

According to a variant embodiment of the audio/video receiver device, the receiver front-end comprises an Ethernet interface for reception of the audio/video streams from an Internet Protocol network.

According to a variant embodiment of the audio/video receiver device, the receiver front-end comprises a tuner for reception of the audio/video streams from a radio frequency broadcast network.

According to a variant embodiment of the audio/video receiver device, the receiver front-end comprises a wireless receiver for reception of the audio/video streams from a wireless communication network.

According to a variant embodiment of the audio/video receiver device, the first interface, the second interface and the interface cable are of a USB type-C.

The present principles also relate to a wall plug part of an audio/video receiver device. The wall plug part comprises a receiver front-end, configured to receive audio/video streams from a distribution network; a power supply; a power and data communication interface, configured to be coupled to a decoder box part of the audio/video receiver device, and configured to transmit power from the power supply to the decoder box part and to transmit the audio/video streams received by the receiver front-end in the wall plug part to the decoder box part for decoding of the audio/video streams received by the receiver front-end in the wall plug part, and to receive tuning commands from the decoder box part for receiving the audio/video streams.

According to a variant embodiment of the wall plug part, the wall plug part is comprised in a first housing separate from a second housing that comprises the decoder box part.

According to a variant embodiment of the wall plug part, the wall plug part is further configured to comprise an arrangement for electrically disconnecting or electrically connecting the receiver front-end to the power and data communication interface; and an arrangement for configuring the wall plug part in the disconnected configuration or in the connected configuration according to a signal received from the interface.

The present principles also relate to a decoder box part of an audio/video receiver device comprising a decoder for decoding audio/video streams; a power and data communication interface, configured to be connected to the wall plug part, to receive power from the wall plug part and to supply the power to the decoder box part and to receive audio/video streams from the wall plug part for decoding by the decoder, and to transmit tuning commands to the wall plug part for receiving the audio/video streams.

According to a variant embodiment of the decoder box part, the wall plug part is comprised in a first housing separate from a second housing comprising the decoder box part.

According to a variant embodiment of the decoder box part, the decoder box part is further configured to comprise an arrangement for electrically disconnecting or electrically connecting the decoder to the power and data communication interface; and an arrangement for configuring the decoder box part in the disconnected configuration or in the connected configuration according to a detection of a connection to the interface of the wall plug part.

### BRIEF DESCRIPTION OF THE DRAWINGS

More advantages of the present disclosure will appear through the description of particular, non-restricting embodiments. In order to describe the manner in which the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure.

The exemplary embodiments will be described with reference to the following figures:
**Figure 1** is a block diagram of a prior art Set-Top Box.
**Figure 2** is an embodiment of an audio/video receiver device according to the present principles.
**Figure 3** is a USB type-C connector.
**Figure 4** is a more detailed embodiment of an audio/video receiver device according to the present principles.
**Figure 5** is a variant embodiment of an audio/video receiver device according to the present principles.
**Figure 6** is yet another variant embodiment of an audio/video receiver device according to the present principles.

### DETAILED DESCRIPTION

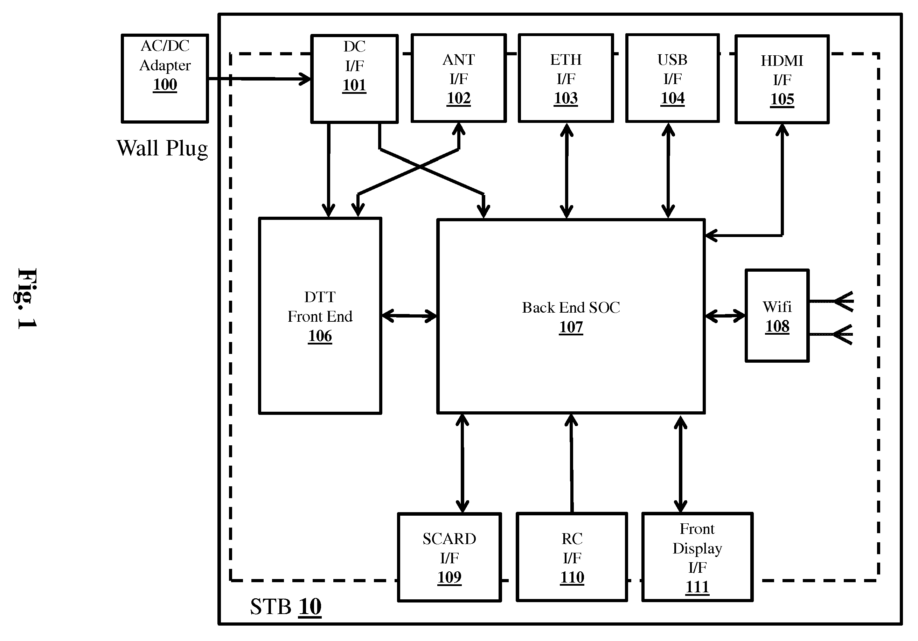

**Figure 1** is a block diagram of a prior art Set-Top Box (STB) **10.** STB **10** comprises a front end **106** for reception of digital television and radio transmission, a back end System On Chip (SOC) **107** for decoding and video processing, a Remote Control (RC) command interface **110,** a front panel display **111** for displaying user information such as channel number and channel name, and an internal WiFi module **108** for wireless data reception and wireless data transmission. STB **10** further comprises an antenna interface **102** for connecting a reception antenna, an Ethernet network interface **103** for connecting to a wired Internet Protocol (IP) network, a Universal Serial Bus (USB) interface **104** for connecting an external storage device for providing Personal Video Recording (PVR) functions, a High Definition Multimedia Interface (HDMI) **105** for connecting Set Top Box **10** to a video rendering device, a smart card interface **109** for inserting a smartcard for decrypting encrypted transmissions, and a direct current (DC) power interface **101** for receiving DC power and for supplying DC power to the electronic components of STB **10.** External to the STB **10** is an Alternating Current / Direct Current (AC/DC) wall plug power adapter **100** for plugging into a mains power network and for converting the mains AC power into DC power suitable for STB **10.**

STB 10 is configured to receive digital terrestrial television and radio broadcast streams via DTT front end **106** from an antenna connected to antenna interface **102.** DTT front end **106** is further configured to demodulate and to demultiplex received program streams and to transmitted these to back end SOC **107.** Back end SOC **107** is configured to decode the streams received from front end **106.** The digital streams comprise for example audio, video and subtitles. The back end SOC **107** is further configured to synchronize different streams if required, for example, it is configured to lipsync synchronize audio with video, and to process the streams for rendering on a rendering device connected to HDMI interface **105.** For streams that are encrypted with a Digital Rights Management (DRM) system, the SOC is configured to uses the services of the smart card interface **109** for decryption. Back end SOC **107** is further configured to use Ethernet interface **103** for alternative or complementary reception of digital streams from an IP network, for example for receipt of Electronic Program Guide information (EPG), and for Video on Demand (VoD) content. An external USB storage device such as a USB memory stick provides necessary storage space allowing STB **10** to offer recording/playback/timeshift functions. WiFi network interface **108** enables STB **10** to connect to a WiFi network, for example a home network, and is complementary to, or alternative for, a connection to an IP network via Ethernet interface **103.** Possibly, STB **10** comprises an optical audio output (not shown) for connection to a home cinema.

It can thus be observed that STB **10** comprises many interfaces. Consequently, STB **10** comprises many connectors and associated wiring. For example, the interfaces depicted on the top of the diagram are arranged on the rear panel of STB **10** while the interfaces on the bottom of the diagram are arranged on the front panel. Thus, on the rear panel of STB **10,** there space is required for a coaxial antenna plug (e.g., of the F connector type) for an RJ45 Ethernet plug, for an USB plug, for an HDMI plug, for an optical output, and for a DC power plug. When designing an STB such as STB **10,** the number and size of these plugs requires that the rear panel is sufficiently dimensioned to receive all connectors. For a user of STB 10, the presence of these connectors and associated wiring is ugly and impractical.

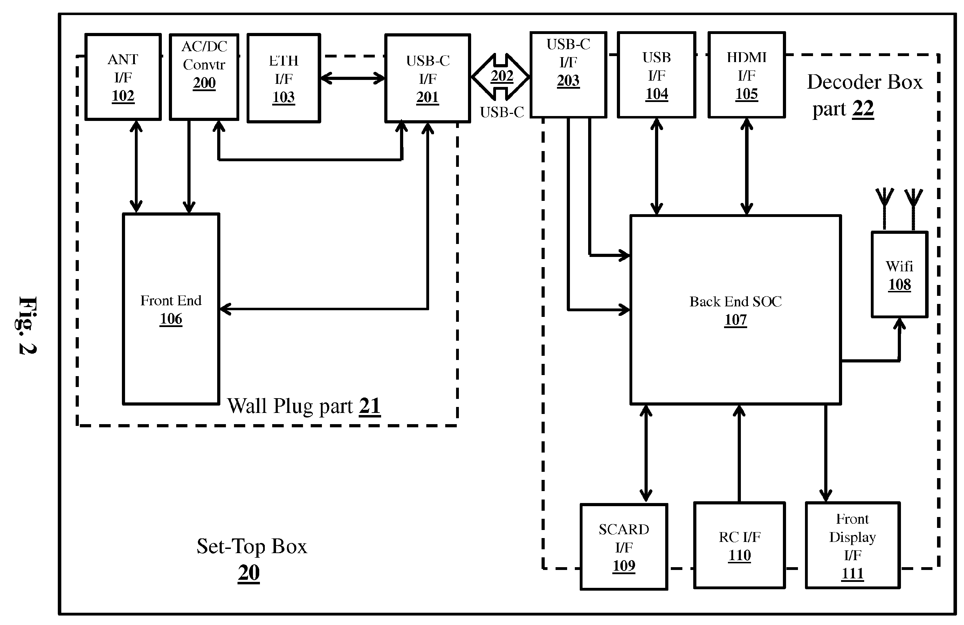

**Figure 2** is an exemplary embodiment of a Set-Top Box **20** according to the present principles. Set-Top Box **20** is split in two parts, namely a wall plug part **21** and a decoder box part **22.** Each of the parts is comprised in a separate housing or casing. The wall plug part **21** is for example comprised in a casing with mains power connector pins for plugging the wall plug part directly in a mains power outlet. The two parts of STB **20** are interconnected through USB type-C interfaces **201/203** and USB type-C cable **202.** The USB type-C is a bidirectional power and data communication interface that allows to transfer both high-speed data and power over a cable with considerable length, e.g., up to 3 meter while still allowing a data transfer rate of up to 5Gbps. A USB type-C cable comprises high performance differential data transfer pairs and high quality Radio Frequency (RF) shielding. The wall plug part **21** is configured to be plugged in a mains power wall plug. The decoder box part **22** is the visible part of set top box **20** and can be put in or on top of a television furniture. It has a front panel display (not shown) configured to indicate channel number and name as well as for indicating of the operation mode of the device, a smart card slot for inserting a smart card (not shown) for decrypting DRM protected content, an RC receiver for receiving user commands from a remote control unit and several switches for operating the device without the use of a remote control (not shown). The wall plug part **21** comprises a Front End **106** that is configured to provide tuning to transmission channels and for demodulating and demultiplexing of transport streams transmitted on the transmission channels and received from a distribution network, such as a satellite or cable network. The wall plug part **21** further comprises an antenna interface **102** and an Ethernet interface **103** configured to connect STB **20** to an IP network. In addition, the wall plug part **21** comprises an AC/DC converter unit (or DC power pack) **200** that is configured to convert mains AC (Alternating Current) power into low voltage Direct Current (DC). Finally, the wall plug part **21** comprises a USB type-C interface **201.** The AC/DC converter unit **200** provides both DC power to DTT Front End **106** and to decoder box part **22** via the USB type-C interfaces **201/203** and USB type-C cable **202.** The decoder box part **22** also comprises a USB type-C interface **203** that is configured to be connected to the wall plug part **21** via a USB 3.X Type C cable **202,** a USB interface **104** that is configured to connect a USB storage device for supplying Personal Video Recording (PVR) functions, an HDMI interface **105** that is configured to be connected to a rendering device such as a High Definition TV (HDTV), a smart card interface **109** configured to decrypt DRM protected content, an RC command interface **110** that is configured to receive user commands from a remote control device (not shown), and front panel display interface **111,** that is configured to be connected to a front panel display (not shown) e.g., for displaying channel names, numbers and operation mode information. Wall plug part **21** and decoder box part **22** are interconnected via the USB type-C interface **201** in wall plug part **21,** interface cable **202,** and USB type-C interface **203** in decoder box part **22.** In addition to power transmission from wall plug part to decoder box part **22,** USB type-C interfaces **201/203** and cable **202** transport Ethernet communication between the Ethernet interface **103** in the wall plug part **21** and back end SOC **107** in decoder box part **22.** In addition, these interfaces **201/203** and cable **202** are used for bidirectional data communication between front end **106** and back end SOC **107.** For example, back end SOC **107** of decoder box part **22** transmits tuning commands to the wall plug part **21** to instruct front-end **106** of wall plug part **21** to tune to a given frequency, to demodulate and to demultiplex a transport stream from a tuned-to transport stream multiplex in order to filter out a transport stream corresponding to a tv channel desired by a user of audio/video receiver device **20,** while front end **106** of wall plug part **21** transmits the filtered out transport stream to the back end SOC **107** of decoder box part via interfaces **201/203** and interface cable **202.**

According to a variant embodiment, the WiFi module **108** is located in the wall plug part **21** instead of being located in decoder box part **22.** This advantageously enables WiFi module **108** and Ethernet interface **103** to share electronic components and/or software stacks.

According to a variant embodiment, the wall plug part **21** does not comprise a DC pack **200,** as DC power is provided to the wall plug part **21** and to the decoder box part **22** for example via USB or PoE (Power over Ethernet). In such a configuration, the wall outlet comprises for example an Ethernet plug for connection to an IP network, or comprising a USB connector for charging mobile devices.

According to a variant embodiment, the front end **106** does not comprise a tuner/demodulator, but comprises an Ethernet interface, such as Ethernet interface **103.** In such configuration, the audio/video streams are not received via a tuner/demodulator, but from an IP network.

According to a variant embodiment, the interfaces **201/203** and cable **202** are not of the USB type C standard, but are according to another standard or norm enabling power transmission and high quality, high speed data transmission, such as FireWire, PoE or PoE+, or according to proprietary interfaces and a corresponding interface cable.

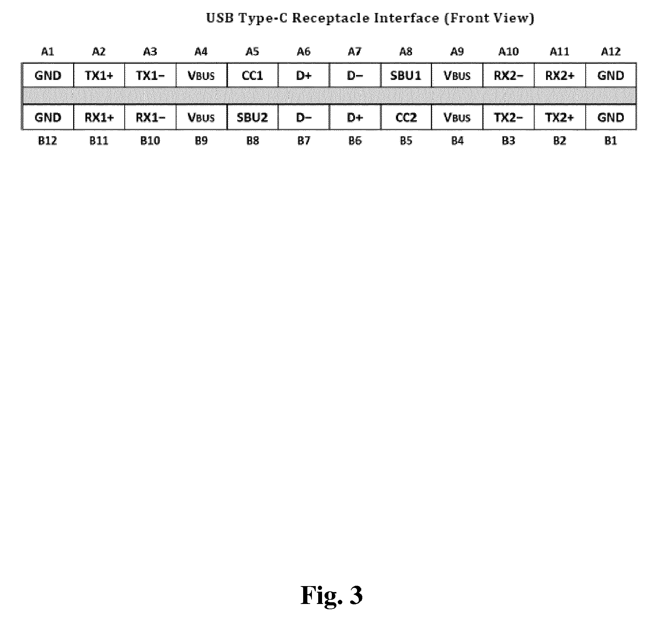

**Figure 3** is a pin-layout of a USB 3.X type-C connector. USB type-C connectors are reversible, which means that they can be connected either way. To enable the reversibility, the pins of the USB-C type connector are duplicated on either side, referred to as 'A' side and 'B' side. Pin A1/B1 is a first ground connection GND. A2-A3/B2-B3 is a first super speed differential pair for high speed data communication. A4/B4 is bus power Vbus. A5/B5 is configuration channel CC for detection of cable orientation and Vbus voltage selection. A6-A7/B6-B7 is a USB2.0 differential pair. A8/B8 is for sideband use. A9/B9 is a second bus power Vbus. A10-A11/B10-B11 is a second super speed differential pair for high speed data communication. A12/B12 is a second ground connection GND. When two devices are connected via USB type-C connectors and a corresponding interface cable, the first thing to do for the devices is to detect their connections which may comprise switching from A to B side or vice versa, and to determine their power requirements using the A5/B5 CC (configuration channel) pins and to configure their interfaces for interconnection.

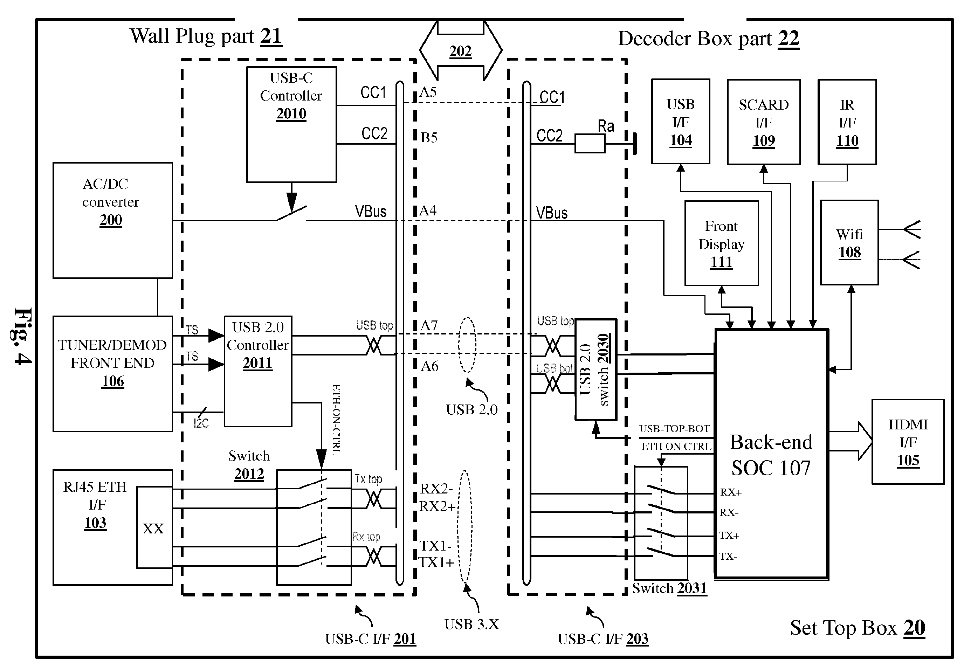

**Figure 4** is a more detailed diagram of an exemplary embodiment of the present principles in Set Top Box **20** of figure 2. The depicted embodiment comprise specific arrangements that protect devices **21** and **22** against inadvertent connection of either of these devices to a standard USB type-C device, and comprise arrangements that protect such standard USB type-C device against such inadvertent connection to either one of the wall plug part **21** or to the decoder box part **22.** Therefore, both the wall plug part **21** and the decoder box part **22,** when not connected to each other, are configured to be in a default configuration which avoids any damage to either part and to any inadvertently connected other USB type C compliant device. In the default configuration of the wall plug part **21** the USB 3.X Type-C connector pins {A2-A3, A10-A11/B2-B3, B10-B11} (see fig.3) are disconnected from Ethernet interface **103** using switch **2012.** Switch **2012** is controlled via a control signal ETH ON CTRL from USB 2.0 controller **2011.** USB 2.0 connectors A6-A7 of the wall plug part **21** are connected to USB 2.0 controller **2011.** Thus, only the D+/D- data pins (A6-A7/B6-B7), the configuration pins (A5/B5) and ground pins (A1, A12 / B1, B12) are connected in the default configuration of the power plug part **21.** Now, if a decoder box part **22** is connected to a wall plug part **21,** the wall plug part **21** provides power to the decoder box part **22** via the Vbus pin (after CC negotiation via the configuration pins). This enables the decoder box part **22** to boot/start up. Once booted or during boot, back end SOC **107** communicates via the D+/D- data pins and the USB 2.0 port and can determine that it is connected to the wall plug part **21** by exchanging information with the wall plug part **21** via the USB 2.0 interface. If the decoder box part **22** determines that it is connected to the wall plug part **21** based on information exchanged with the wall plug part **21** via the USB 2.0 interface, the decoder box part **22** enables switch **2031** via the control signal ETH ON CTRL. This results in an electrical coupling of the Ethernet interface **103** in the wall plug part **21** with the Ethernet circuit in the decoder box part **22** via the USB 3.X Type-C TX1-/TX1+ and RX2-/RX2+ pins, and results in an electrical coupling of the DTT tuner/demodulator front end **106** in the wall plug part **21** with the back end SOC **107** in the decoder box part **22** via the USB 2.0 D+/D- pins. Thus, advantageously and with the above discussed specific arrangement, if a wall plug part **21** is connected to a USB 3.X Type-C device, the device can be provided with power as the CC and Vbus pins are electrically connected to the wall plug part **21,** but the pins TX1-/TX1+ and RX2-/RX2+ will not be electrically connected to the RJ45 Ethernet interface **103** of the wall plug part **21,** nor will the D+/D- pins be electrically connected to the DTT tuner/demodulator **106** of the wall plug part **21,** as the wall plug part 21 will not receive a control signal from the device that would allow it to do so. Thus, no damage is caused to the wall plug part **21** and to the device. Likewise, if a decoder box part **22** is connected to the USB 3.X Type-C device, no damage will be caused to the decoder box part **22** nor to the device since the decoder box part **22** will not electrically connect the TX1-/TX1+ and RX2-/RX2+ pins as it does not recognize a wall plug part **21** and thus the ETH ON CTRL signal will not be provided to USB switch **2031.**

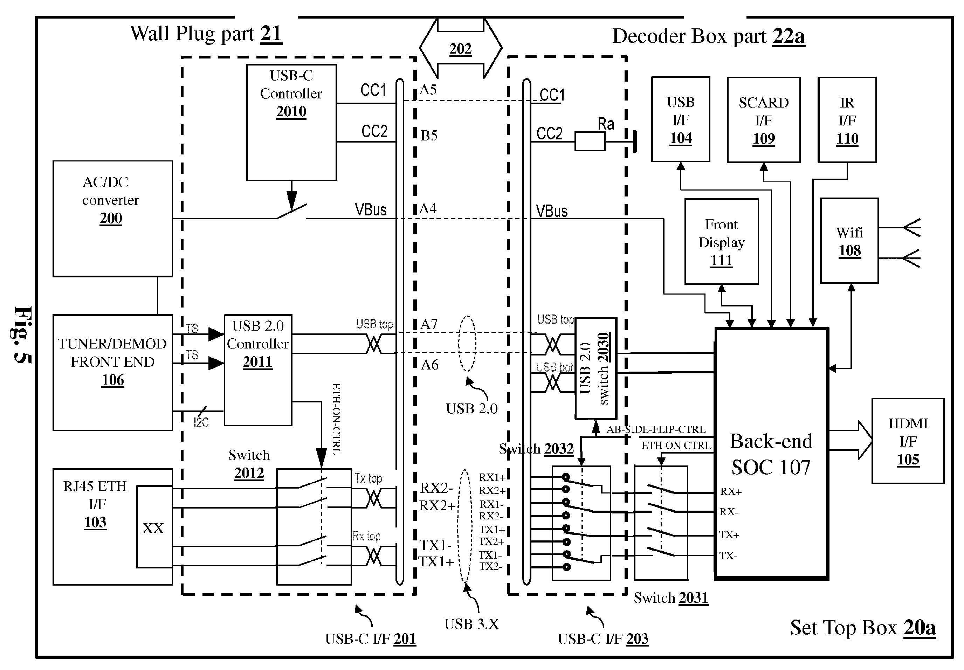

**Figure 5** is a variant embodiment of the present principles in a Set Top Box **20a.** USB controller **2010** implements the standard USB 3.X Type-C interface setup exchange protocol based on use of the CC pins (CC1, CC2) for determining the voltage requirements and for discovering how the interfaces are oriented; as mentioned before, the USB 3.X Type-C interface and cables are reversible. Therefore, according to the embodiment of figure 5, an improvement of the present principles allows to connect a USB type-C cable either way. The improvement comprises an arrangement on the wall plug part side. If the USB type-C cable interconnects the wall plug part **21** and the decoder box part **22** but the cable is connected in the "wrong" way, the back end SOC **107** will receive power but cannot "see" the wall plug part **21** as it is not connected to the USB 2.0 pins A7 A6 of the wall plug part **21** and cannot detect a presence of the wall plug part **21.** When compared to the embodiment depicted in figure 4, the set top box according to the variant embodiment of figure 5, the decoder box part **22** comprises an additional switch **2032.** If the decoder box part **22a** cannot detect the presence of the wall plug part **21,** it is perhaps because the type-C cable is connected the "wrong" way, i.e., the USB 2.0 pins of the decoder box part **22a** are not connected to the USB 2.0 pins of the wall plug part. Therefore, SOC **107** generates a control signal AB-SIDE-FLIP-CTRL (named USB-TOP-BOT in figure 4) signal in the embodiment of figure 4 that reverses the connections on the USB 2.0 switch **2030** and the Ethernet connections on the decoder box part side **22a.** If the decoder box part **22a** then determines that it is connected to the wall plug part **21** based on information exchanged with the wall plug part **21** via the USB 2.0 interface, the decoder box part **22a** enables switch **2031** via the control signal ETH ON CTRL to establish an electrical connection of the Ethernet interface with the wall plug part **21.**

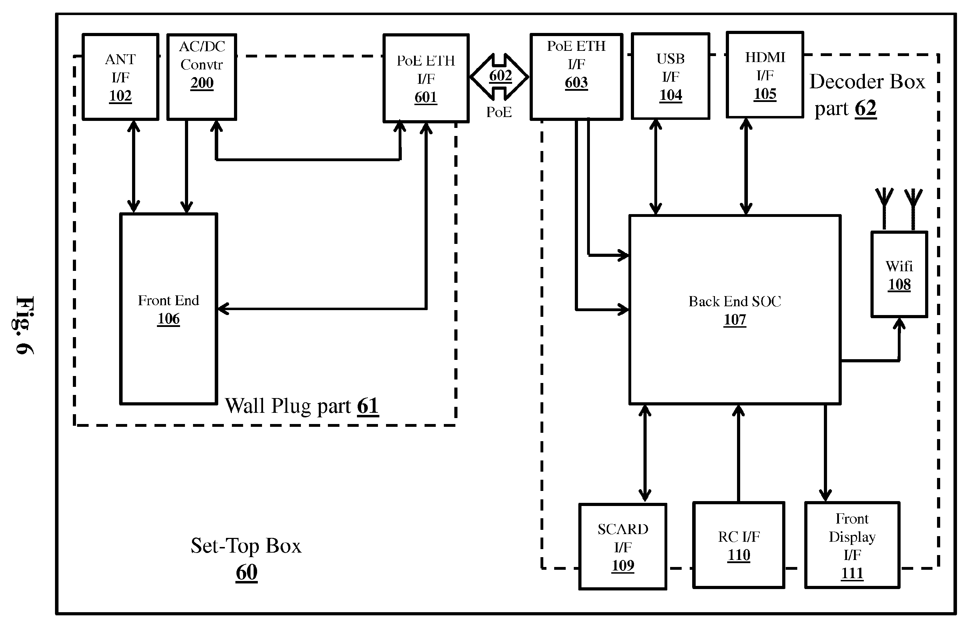

**Figure 6** is a variant embodiment of an audio/video receiver device **60** based on a PoE+ interface. The AC/DC converter **200** of wall plug part **61** transmits power to the PoE+ interface **601.** Front end **106** transmits audio/video streams to PoE+ interface **601.** Wall plug part **61** and decoder box part **62** are interconnected via the PoE+ interface **601** in wall plug part **61,** interface cable **602,** and PoE+ interface **603** in decoder box part **62.** PoE+ interface **603** splits power and data communication, and supplies power to the elements of decoder box part **62** and received audio/video streams to back end SOC **107.** Back end SOC **107** also communicates with the wall plug part **61** via PoE+ interface **603,** interface cable **602** and PoE interface **601** in the wall plug part **61,** for example to instruct front-end **106** to tune to a given frequency, to demodulate and to demultiplex a transport stream from a tuned-to transport stream multiplex in order to filter out a transport stream corresponding to tv channel desired by a user of audio/video receiver device **60.**

As will be appreciated by one skilled in the art, some elements in the drawings may not be used or be necessary in all embodiments. Some operations may be executed in parallel. Variant embodiments other than those illustrated and/or described are possible. For example, the arrangement to reverse the Ethernet connectors may be comprised in the wall plug part instead of being comprised in the set top box part.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. An audio/video receiver device (20) for receiving audio/video streams, wherein the audio/video receiver device is split in two parts and comprises:
a wall plug part (21), comprised in a first housing;
a decoder box part (22), comprised in a second housing;
a first interface (201) in said wall plug part and a second interface (203) in said decoder box part, said first interface and said second interface being configured to electrically interconnect said wall plug part and said decoder box part through an interface cable;
said wall plug part comprising at least a receiver front-end (106) configured to receive said audio/video streams from a distribution network and to transmit said audio/video streams received from said distribution network via said first interface to said decoder box part;
said decoder box part comprising a decoder (107) configured to decode said audio/video streams received from said receiver front-end via said second interface.

2. The audio/video receiver device according to claim 1, wherein said receiver front-end in said wall plug part is configured to receive tuning commands from said decoder box part for receiving said audio/video streams.

3. The audio/video receiver device according to claim 1 or 2, wherein said wall plug part further comprises a power supply and wherein said decoder box part is further configured to receive power from said power supply in said wall plug part via said second interface.

4. The audio/video receiver device according to claims 1 to 3, wherein said decoder box part further comprises a first arrangement (2030, 2031, 107) configured to put said second interface to a default configuration in which said decoder is disconnected from said second interface and to put said second interface to a connected configuration in which said second interface is connected to said decoder, said first arrangement being further configured to switch said second interface from said default configuration to said connected configuration based on a detection on said second interface of a presence of said wall plug part.

5. The audio/video receiver device according to claims 1 to 4, wherein said wall plug part further comprises a second arrangement (2011, 2012) configured to put said first interface in a default configuration in which said receiver front-end is disconnected from said first interface and to put said first interface in a connected configuration in which said first interface is connected to said receiver-front end, said second arrangement being further configured to switch said first interface from said default configuration to said connected configuration based on a reception of a control signal.

6. The audio/video receiver device according to any of claims 1 to 5, wherein said receiver front-end comprises an Ethernet interface for reception of said audio/video streams from an Internet Protocol network.

7. The audio/video receiver device according to any of claims 1 to 6, wherein said receiver front-end comprises a tuner for reception of said audio/video streams from a radio frequency broadcast network.

8. The audio/video receiver device according to any of claims 1 to 7, wherein said receiver front-end comprises a wireless receiver for reception of said audio/video streams from a wireless communication network.

9. The audio/video receiver device according to any of claims 1 to 8, wherein said first interface, said second interface and said interface cable are of a USB type-C.

10. A wall plug part (21) of an audio/video receiver device (20) comprising:
a receiver front-end (106), configured to receive audio/video streams from a distribution network;
a power supply (200);
a power and data communication interface (201), configured to be coupled to a decoder box part (22) of said audio/video receiver device, and configured to transmit power from said power supply to said decoder box part and to transmit said audio/video streams received by said receiver front-end in said wall plug part to said decoder box part for decoding of said audio/video streams received by said receiver front-end in said wall plug part, and to receive tuning commands from said decoder box part for receiving said audio/video streams.

11. The wall plug part according to claim 10, wherein said wall plug part is comprised in a first housing separate from a second housing comprising said decoder box part.

12. The wall plug part according to claim 10 or 11, wherein the wall plug part is further configured to comprise:
an arrangement (2012) for electrically disconnecting or electrically connecting said receiver front-end to said power and data communication interface; and
an arrangement (2011) for configuring said wall plug part in said disconnected configuration or in said connected configuration according to a signal received from said interface.

13. A decoder box part (22) of an audio/video receiver device (20) comprising:
a decoder (107) for decoding audio/video streams;
a power and data communication interface (203), configured to be connected to said wall plug part, to receive power from said wall plug part and to supply said power to said decoder box part and to receive audio/video streams from said wall plug part for decoding by said decoder, and to transmit tuning commands to said wall plug part for receiving said audio/video streams.

14. The decoder box part according to claim 13, wherein said wall plug part is comprised in a first housing separate from a second housing comprising said decoder box part.

15. The decoder box part according to claim 13 or 14, wherein the decoder box part is further configured to comprise:
an arrangement (2031) for electrically disconnecting or electrically connecting said decoder to said power and data communication interface; and
an arrangement (2030) for configuring said decoder box part in said disconnected configuration or in said connected configuration according to a detection of a connection to said interface of said wall plug part.
